# EUROPEAN PATENT SPECIFICATION

(11) **EP 4 357 216 B1**
(45) Date of publication and mention of the grant of the patent: **01.07.2026**
(21) Application number: 23204635.9
(22) Date of filing: 19.10.2023
(51) Int. Cl.: B61D 17/08, B60N 2/02, B61D 33/00

(54) **RAILWAY CARRIAGE WITH RECONFIGURABLE ARRANGEMENT OF SEATS**
EISENBAHNWAGEN MIT REKONFIGURIERBARER SITZANORDNUNG
VOITURE FERROVIAIRE AVEC AGENCEMENT RECONFIGURABLE DE SIÈGES

(30) Priority: 21.10.2022 IN 202241060233
(43) Date of publication of application: 24.04.2024
(73) Proprietor: ALSTOM Holdings, 93400 Saint-Ouen-sur-Seine (FR)
(72) Inventor: DESHPANDE, Vishal, 560093 Bangalore (IN); PREISS, Paul, 67110 Reichshoffen (FR); DAS, Pranjal, 560093 Bangalore (IN); SUMAN, Nataraj, 560093 Bangalore (IN)
(74) Representative: Plasseraud IP

(56) References cited:
- EP-A1- 3 103 696
- EP-A1- 3 851 318
- EP-A1- 3 995 380
- DE-A1- 102009 056 715
- FR-A1- 3 041 309
- FR-A1- 3 045 519
- US-A1- 2014 376 994
- US-B2- 8 579 350

## Description

The present invention concerns a railway carriage with a reconfigurable arrangement of seats.

As known, in the field of railway public transportation it is important to maximize the passengers capacity by properly exploiting the space available inside each railway carriage while at the same time optimizing the comfort of passengers without exceeding the maximum axle loads.

Nowadays, in order to fulfill such need, the distribution of seats is designed according to a configuration which is substantially prefixed or that offers anyhow a very limited possibility of changes.

For example, according to a solution widely used, seats are mounted on the carbody of a carriage by means of welded brackets.

Thus, if some changes of the seat's arrangement are required, the impact in terms of time and costs on the carbody is rather huge due to the need of removing, redesigning and re-positioning the new mounting brackets.

US 8579350 B2 discloses a modular transit system having a track system and/or modular seating wherein an adjustable furnishing system is de-mountably mountable to a vertical wall. The adjustable furnishing system comprises a mounting structure carried by the wall, a support frame having opposite first and second ends, and a furnishing carried by the support frame. The first end of the support frame releasably attaches to the mounting structure and the mounting structure supports the support frame in a cantilevered position with the second end extending outwardly from the wall with the furnishing carried thereon.

EP 3995380 A1 discloses a structure for freely changing an arrangement interval of seats in a cabin of a vehicle, wherein the structure includes: a support frame configured to support the seats from below as a cantilever beam to define a space between the seats and a floor plate of the vehicle; a guide rail provided along a side structure of the vehicle along a longitudinal direction of the cabin; a support slider which is fixed to a base end portion of the support frame and is assembled to the guide rail, and is freely movable along the guide rail while bearing a load and a rotation moment acting from the support frame; and a locking pin configured to fix the support slider to the guide rail.

FR 3041309 A1 discloses a seat structure which comprises: a seat comprising a backrest and a seat, and a member for supporting the seat that comprises first means for attachment to a structural wall of the vehicle, and second means (for attachment to the seat. Each support member comprises: a first part arranged below the seat of the seat in a vertical direction and fixed to this seat by the second fixing means, and a second part integral with the first part and which extends below the first part in the vertical direction, and comprising the first fixing means.

The present invention is purposively aimed at providing a solution which allows mitigating at least partially such issue.

Thus, there is provided a railway carriage according to claim 1.

Preferred embodiments of the invention are specified in the dependent claims, the contents of which are to be understood as an integral part of this description.

Further characteristics and advantages will become apparent from the description of some preferred but not exclusive exemplary embodiments of a railway carriage according to the present disclosure, illustrated only by way of non-limitative examples with the accompanying drawings, wherein:
Figure 1 is a schematic plan view of a railway carriage according to the invention;
Figures 2-3 are views along the section A-A of figure 1, showing two possible mounting of seats to be aligned along a first longitudinal row facing the interior of the railway carriage, according to the present invention;
Figure 4 is a view along the section B-B of figure 1 showing a mounting of seats to be aligned along a second transversal row facing the back part of the railway carriage, according to the present invention;
Figure 5 is a view showing in some more details the connection of a seat via bolt and hooking means used in a railway carriage according to the invention;
Figure 6 is a front view schematically showing two possible embodiments of a lining panel, realized in a single piece or comprising two separate pieces, which is usable in a railway carriage according to the invention.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", or "set" or any similar term is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In addition, when the term "about" or "substantial" or "substantially" is used herein, it has to be understood as encompassing an actual variation of plus or minus 5% with respect to an indicated reference value, axis, time or position, and when the terms transversal or transversally are hereby used, they have to be understood as encompassing a direction non-parallel to the reference part(s) or direction(s)/axis they refer to, and perpendicularity has to be considered a specific case of transverse direction.

Finally, in the following description and claims, the numeral ordinals first, second, third et cetera, will be used only for the sake of clarity of description and in no way they should be understood as limiting for whatsoever reason; in particular, the indication of a component referred to for instance as the "third ..." does not imply necessarily the presence or strict need of the preceding "first" or "second" ones, unless such presence is clearly evident for the correct functioning of the subject embodiment(s) described, nor that the order should be the one described in the illustrated exemplary embodiment(s).

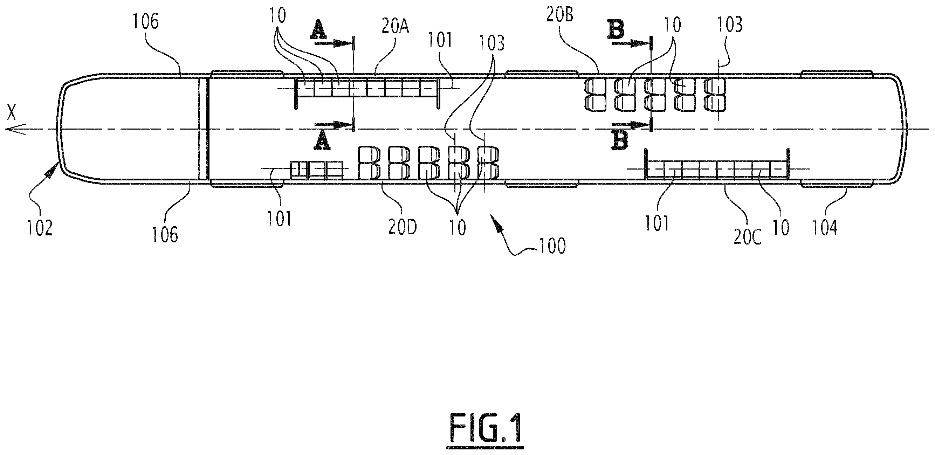

Figure 1 schematically shows a top view of the interior of a railway carriage according to the invention, indicated by the overall reference number 100, which can be for instance a carriage of a train, or of a metro convoy, or of a tram.

The railway carriage 100 extends along a longitudinal axis X and has a front part 102, an opposite back part 104, and two sides 106 interconnecting the front part 102 with the back part 104.

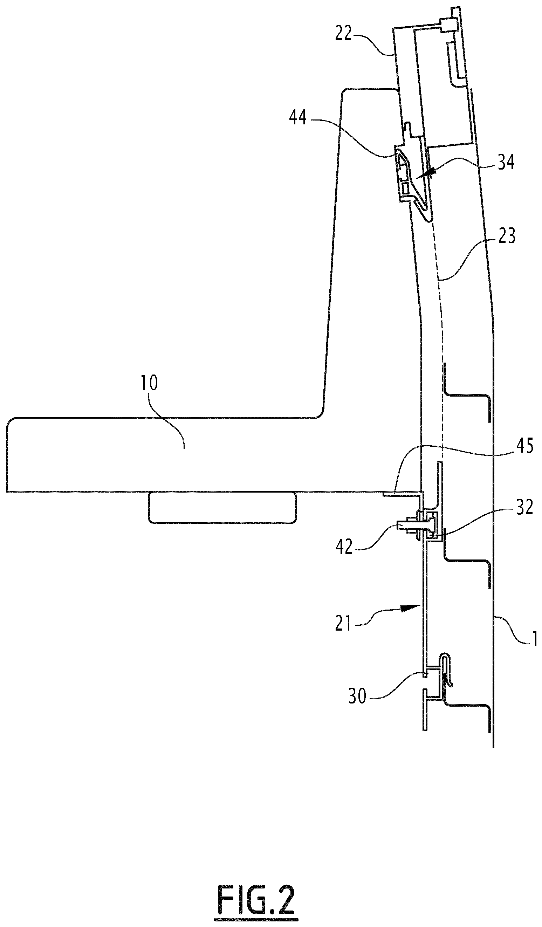

According to solutions well known in the art and therefore not described herein in details, the mechanical structural part of the carriage 100 is constituted by a carbody shell, one portion of which is schematically represented in figures 2-5 with the reference number 1; clearly such carbody shell 1 can have any suitable shape according to the applications.

Inside the railway carriage there are provided a plurality of passenger seats 10.

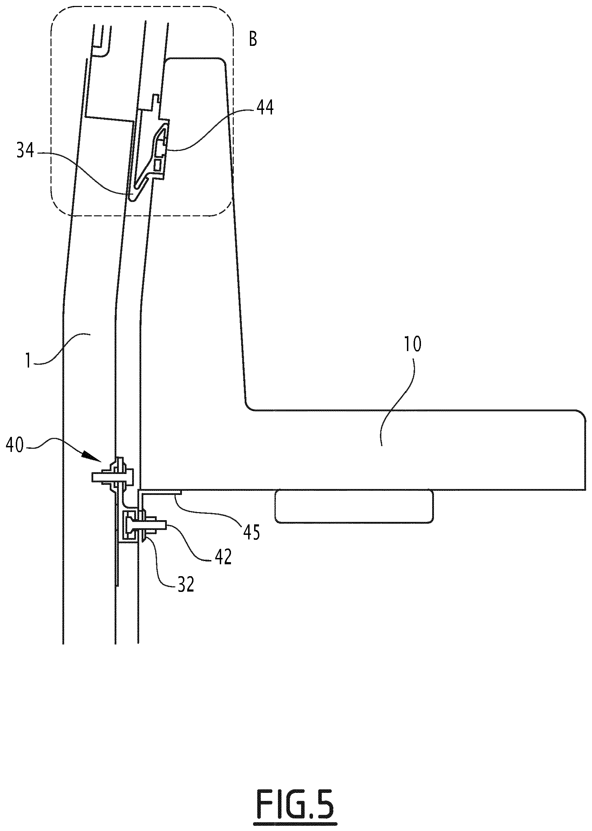

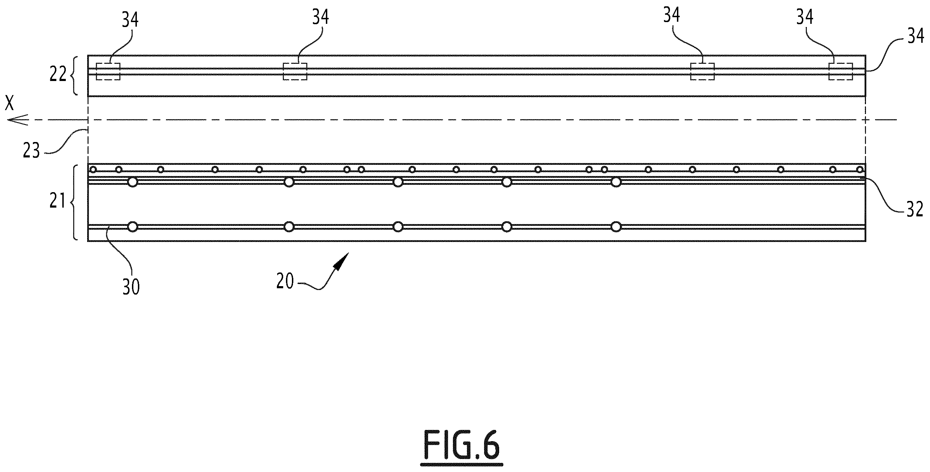

The railway carriage 100 further comprises at least one lining panel indicated in figures 6 by the reference number 20 which is fastened to an inner side of the carbody shell 1, in particular mechanically directly fastened, e.g. bolted to the carbody shell 1 by means of bolt means, schematically represented in figure 5 by the cumulative reference number 40.

Conveniently, in the railway carriage 100 according to the present invention, the at least one lining panel 20 integrates in its structure one or more anchoring portions which are configured and mutually positioned to releasably attach thereto one or more seats 10 aligned either along a first longitudinal row, indicated in figure 1 by the reference number 101, where the attached one or more seats 10 face the interior of the railway carriage 100, and/or along a second traversal row, indicated in figure 1 by the reference number 103, where the attached one or more seats 10 face the front part 102 or the back part 104 of the railway carriage 100.

According to the invention, the at least one lining panel 20 comprises two separate pieces, namely it comprises a first lining panel 21 and a second lining panel 22, and the one or more anchoring portions comprise a first anchoring portior 30 and a second anchoring portion 32 which are integrated in the structure of the first lining panel 21, and a third anchoring portion 34 which is integrated in the structure of the second lining panel 22.

Conveniently, each of the first panel 21 and the second panel 22 are made of extruded aluminum.

In one possible embodiment, for instance when seats are mounted in a longitudinal configuration, the at least one lining panel 20 is formed just by the first and second separate panels 21 and 22.

In another possible embodiment, for instance when seats are mounted in a transversal configuration, the at least one lining panel 20 comprises a third panel or part 23, also made for example of extruded aluminum, which is interposed between the first and second panels 21 and 22.

In figure 6 the two parts or panels 21 and 22 are depicted with continuous lines, while the third panel 23 is represented schematically with a dotted line (as also done in figure 2).

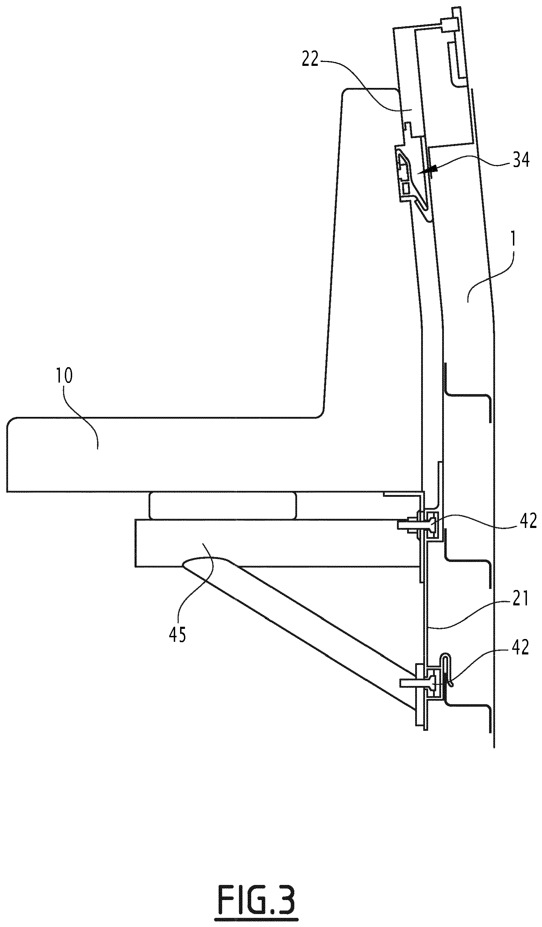

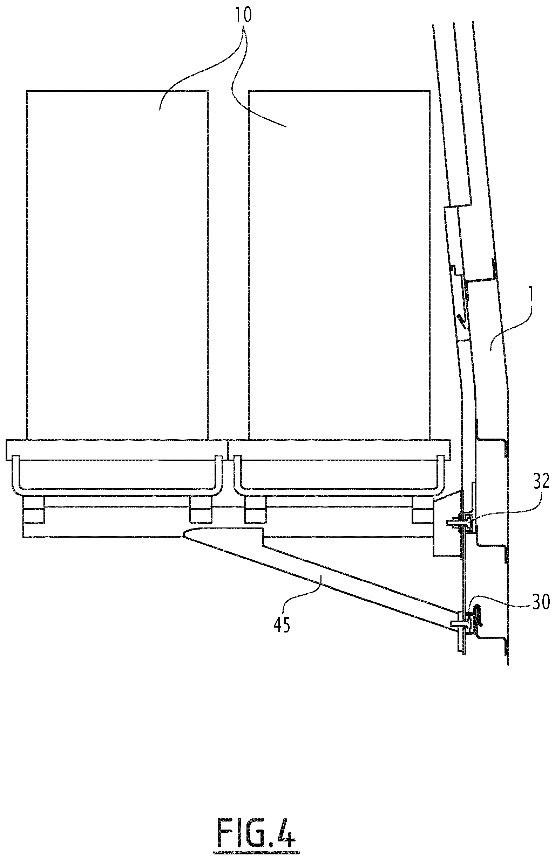

Usefully, one or more first seats 10 of the plurality of seats 10 are attachable to the second anchoring portion 32 and to at least one of the first and third anchoring portions 30 or 34, to be aligned along a first longitudinal row 101 as shown in figures 1, 2 and 5; and/ or the one or more first seats 10 or further one or more second seats 10 are attachable to the first and second anchoring portions 30, 32 to be aligned along a second traversal row 103, as shown in figures 1 and 4, or along a first longitudinal row 101 as shown in figures 1 and 3.

In one possible embodiment, as illustrated in figures 2-6, the first and second anchoring portions 30, 32 comprise a first rail 30 and a second rail 32, respectively, wherein the first and second rails 30, 32 extend, substantially parallel to each other, for at least a portion of the first lining panel 21 along the longitudinal axis X.

In particular, the first and second rails 30, 32 have each a C-shaped transversal cross-section.

According to a possible embodiment, the third anchoring portion 34 comprises at least one hooking recess 34.

In particular, the at least one hooking recess 34 is provided on the second lining panel 22 spaced apart from and above the first and second rails 30, 32.

According to one possible embodiment, as illustrated in more details in figure 6, the at least one hooking recess 34 is formed by a third rail provided on and extending continuously along the longitudinal axis X, for at least a portion of the second lining panel 22, for instance substantially parallel to the first and second rails 30, 32.

Alternatively, the at least one hooking recess 34 comprises a plurality of individual hooking recesses 34 spaced apart from each other at predefined anchoring positions on the second lining panel 22, which individual hooking recesses 34 are schematically depicted in figure 6 as dotted boxes.

In practice, when installing the seats, bolt means, schematically represented in figures 2-4 and 5 by the reference number 42, are used to mechanically fasten, in a releasable way, the row of seats to the first and/or second anchoring portions 30, 32, while hooking means, which are integral with or secured to at least one seat 10 of the plurality of seats, schematically represented in figures 2 and 5 by the reference number 44, are engaged with the least one hooking recess 34 when necessary.

For instance, if the seats are installed along a transversal row 103, as illustrated in figure 4, bolt means 42 are installed in both anchoring portions, e.g. the rails 30 and 32 thus securing a mounting bracket 45 (or any similar mounting component) which carries the row of aligned seats 10.

For example, if the seats are installed along a longitudinal row 101, then bolt means 42 are installed again in both anchoring portions 30 and 32; alternatively, bolt means are installed in one of the first or second anchoring portions 30, 32, e.g. the second rail 32, securing the mounting bracket 45 or any similar component, and the hooking means 44 are engaged into the corresponding hooking recess 34, as for example illustrated in figures 2 and 5.

Thus, in the railway carriage 100 according to the invention, depending on the configuration desired, seats 10 can be installed in variable ways.

For example, with reference to figure 1 where four lining panels 20A, 20B, 20C and 20D have been schematically depicted, seats 10 can be attached to a corresponding lining panel 20 aligned along a corresponding longitudinal row 101 (see panels 20A and 20C in figure 1), and/or along a corresponding transversal row 103 (see panel 20B in figure 1), and/or even in a mixed configuration, namely along a first longitudinal row 101 and a corresponding second transversal row 103 (see panel 20D).

Further, the initial configuration can be dismounted and reconfigured easily by dismantling the used bolt means/hooking means, then repositioning the seats in the newly desired configuration by using the bolt/hooking means as needed.

According to an alternative embodiment, the at least one lining panel 20 can be made in a single piece, and the one or more anchoring portions comprise a first anchoring portion 30, a second anchoring portion 32, and a third anchoring portion 34 which are all integrated in the structure of the single lining panel 20.

Thus, according to this alternative embodiment, the single panel 20 is formed by the two panels 21 and 22, forming in this case portions of the single panel, and where applicable, by the further portion, schematically represented in figures 2 and 6 by the dotted line 23, which joins the two parts 21 and 22.

Conveniently, also in this alternative embodiment the single piece panel 20 is made of a unique piece of extruded aluminum.

Hence, it is evident from the foregoing description that the railway carriage according to the present invention allows achieving the intended aim since it provides a solution where the arrangement of seats can be varied and reconfigured in a simpler and more cost effective way with respect to currently known solutions.

It is remarkable that these results are achieved according to a very simple solution using the described lining panel(s) which integrate(s) the anchoring portions needed for releasably attaching thereto the seats aligned according to the desired rows, with the possibility of releasing seats previously mounted for example aligned a longitudinal row and remounting them aligned along one or more transversal rows, or vice versa.

The railway carriage 100 thus conceived is susceptible of modifications and variations, all of which are within the scope of the inventive concept as defined by the appended claims. For example, in relation to the specific application, the anchoring portions can be mutually positioned differently with respect to the exemplary embodiment previously described; the or each lining panel can be properly sized, namely length and width can be properly varied, and/or also the thickness can be varied in order to provide a proper mechanical robustness.

## Claims

1. A railway carriage (100) comprising:
- a carbody shell (1);
- a plurality of seats (10);
- at least one lining panel (20) which is fastened to an inner side of said carbody shell (1); wherein said at least one lining panel (20) integrates in its structure one or more anchoring portions (30, 32, 34) which are configured and mutually positioned to releasably attach thereto one or more seats (10) of said plurality of seats (10) aligned either along a first longitudinal row (101) where the attached one or more seats (10) face the interior of the railway carriage (100), and/or along a second traversal row (103) where the attached one or more seats (10) face the front part (102) or the back part (104) of the railway carriage (100); wherein
said at least one lining panel (20) comprises a first lining panel (21) and a second lining panel (22), the railway carriage (100) being **characterized in that** said one or more anchoring portions comprise a first anchoring portion (30) and a second anchoring portion (32) integrated in the structure of said first lining panel (21), and a third anchoring portion (34) integrated in the structure of said second lining panel (22); and
wherein one or more first seats (10) of said plurality of seats (10) are attachable to said second anchoring portion (32) and to at least one of said first and third anchoring portions (30, 34) aligned along a first longitudinal row (101), and/or said one or more first seats (10) or further one or more second seats (10) of said plurality of seats are attachable to said first and second anchoring portions (30, 32) aligned along a second traversal row (103) or along a first longitudinal row (101).

2. The railway carriage (100) according to claim 1, wherein said at least one lining panel (20) comprises a third lining panel (23) which is positioned between said first and second panels (21, 22), and wherein one or more of said first, second and third panels (20, 21, 22) are made of extruded aluminum.

3. The railway carriage (100) according to any of claims 1 or 2, wherein said first and second anchoring portions (30, 32) comprise a first rail (30) and a second rail (32), respectively, said first and second rails (30, 32) extending, substantially parallel to each other, for at least a portion of said first lining panel (21) or of said single lining panel (20).

4. The railway carriage (100) according to claim 3, wherein said first and second rails (30, 32) have each a C-shaped transversal cross-section.

5. The railway carriage (100) according to any one claims 1 to 4, wherein said third anchoring portion (34) comprises at least one hooking recess (34).

6. The railway carriage (100) according to claim 5 when taken in combination with claim 3, wherein said at least one hooking recess (34) is provided on said second lining panel (22) spaced apart from and above said first and second rails (30, 32).

7. The railway carriage (100) according to any one of claims 5 and 6, wherein said at least one hooking recess (34) is formed by a third rail provided on and extending continuously for at least a portion of said second ling panel (22).

8. The railway carriage (100) according to any one of claims 5 and 6, wherein said at least one hooking recess (34) comprises a plurality of individual hooking recesses (34) spaced apart from each other at predefined anchoring positions of said second lining panel (22).

## Patentansprüche

1. Eisenbahnwagen (100), umfassend:
- eine Karosserie-Hülle (1);
- eine Mehrzahl von Sitzen (10);
- wenigstens ein Verkleidungspaneel (20), welches an einer inneren Seite der Karosserie-Hülle (1) befestigt ist; wobei das wenigstens eine Verkleidungspaneel (20) in seiner Struktur ein oder mehrere Verankerungsabschnitte (30, 32, 34) integriert, welche dazu eingerichtet und wechselseitig positioniert sind, lösbar daran einen oder mehrere Sitze (10) der Mehrzahl von Sitzen (10) anzubringen, welche entweder entlang einer ersten longitudinalen Reihe (101), wobei der angebrachte eine oder die mehreren Sitze (10) zu der Innenseite des Eisenbahnwagens (100) weisen und/oder entlang einer zweiten transversalen Reihe (103) ausgerichtet sind, wobei der angebrachte eine oder die mehreren Sitze (10) zu dem vorderen Teil (102) oder dem hinteren Teil (104) des Eisenbahnwagens (100) weisen;
wobei das wenigstens eine Verkleidungspaneel (20) ein erstes Verkleidungspaneel (21) und ein zweites Verkleidungspaneel (22) umfasst, wobei der Eisenbahnwagen (100) **dadurch gekennzeichnet ist, dass** der eine oder die mehreren Verankerungsabschnitte einen ersten Verankerungsabschnitt (30) und einen zweiten Verankerungsabschnitt (32) umfassen, welche in die Struktur des ersten Verkleidungspaneels (21) integriert sind, sowie einen dritten Verankerungsabschnitt (34), welcher in die Struktur des zweiten Verkleidungspaneels (22) integriert ist; und wobei ein oder mehrere erste Sitze (10) der Mehrzahl von Sitzen (10) an dem zweiten Verankerungsabschnitt (32) und wenigstens einem aus den ersten und dritten Verankerungsabschnitten (30, 34) anbringbar sind, welche entlang einer ersten longitudinalen Reihe (101) ausgerichtet sind, und/oder der eine oder die mehreren ersten Sitze (10) oder weitere ein oder mehrere zweite Sitze (10) der Mehrzahl von Sitzen an den ersten und zweiten Verankerungsabschnitten (30, 32) anbringbar sind, welche entlang einer zweiten transversalen Reihe (103) oder entlang einer ersten longitudinalen Reihe (101) ausgerichtet sind.

2. Eisenbahnwagen (100) nach Anspruch 1, wobei das wenigstens eine Verkleidungspaneel (20) ein drittes Verkleidungspaneel (23) umfasst, welches zwischen den ersten und zweiten Paneelen (21, 22) positioniert ist, und wobei eines oder mehrere aus den ersten, zweiten und dritten Paneelen (20, 21, 22) aus extrudiertem Aluminium hergestellt sind.

3. Eisenbahnwagen (100) nach einem der Ansprüche 1 oder 2, wobei die ersten und zweiten Verankerungsabschnitte (30, 32) eine erste Schiene (30) bzw. eine zweite Schiene (32) umfassen, wobei sich die ersten und zweiten Schienen (30, 32) im Wesentlichen parallel zueinander erstrecken, für wenigstens einen Abschnitt des ersten Verkleidungspaneels (21) oder des einzelnen Verkleidungspaneels (20).

4. Eisenbahnwagen (100) nach Anspruch 3, wobei die ersten und zweiten Schienen (30, 32) jeweils einen C-förmigen transversalen Querschnitt aufweisen.

5. Eisenbahnwagen (100) nach einem der Ansprüche 1 bis 4, wobei der dritte Verankerungsabschnitt (34) wenigstens eine Hakenausnehmung (34) umfasst.

6. Eisenbahnwagen (100) nach Anspruch 5, wenn in Kombination mit Anspruch 3 genommen, wobei die wenigstens eine Hakenausnehmung (34) an dem zweiten Verkleidungspaneel (22) beabstandet von und oberhalb der ersten und zweiten Schienen (30, 32) bereitgestellt ist.

7. Eisenbahnwagen (100) nach einem der Ansprüche 5 und 6, wobei die wenigstens eine Hakenausnehmung (34) durch eine dritte Schiene gebildet ist, welche an dem zweiten Verkleidungspaneel (22) bereitgestellt ist und sich durchgehend für wenigstens einen Abschnitt davon erstreckt.

8. Eisenbahnwagen (100) nach einem der Ansprüche 5 und 6, wobei die wenigstens eine Hakenausnehmung (34) eine Mehrzahl von individuellen Hakenausnehmungen (34) umfasst, welche voneinander bei vordefinierten Verankerungspositionen des zweiten Verkleidungspaneels (22) beabstandet sind.

## Revendications

1. Une voiture ferroviaire (100) comprenant :
- une carrosserie (1) ;
- une pluralité de sièges (10) ;
- au moins un panneau de revêtement (20) qui est fixé sur un côté intérieur de ladite carrosserie (1) ; dans laquelle ledit au moins un panneau de revêtement (20) intègre dans sa structure une ou plusieurs portions d'ancrage (30, 32, 34) qui sont configurées et positionnées mutuellement pour permettre la fixation amovible d'un ou plusieurs sièges (10) de ladite pluralité de sièges (10) alignés soit le long d'une première rangée longitudinale (101) où le ou les sièges (10) fixés font face à l'intérieur de la voiture ferroviaire (100), et/ou le long d'une deuxième rangée transversale (103) où le ou les sièges (10) fixés font face à la partie avant (102) ou à la partie arrière (104) de la voiture ferroviaire (100) ; dans laquelle ledit au moins un panneau de revêtement (20) comprend un premier panneau de revêtement (21) et un deuxième panneau de revêtement (22),
la voiture ferroviaire (100) étant **caractérisée en ce que** ladite ou lesdites portions d'ancrage comprennent une première portion d'ancrage (30) et une deuxième portion d'ancrage (32) intégrées dans la structure dudit premier panneau de revêtement (21), et une troisième portion d'ancrage (34) intégrée dans la structure dudit deuxième panneau de revêtement (22) ; et
dans laquelle un ou plusieurs premiers sièges (10) de ladite pluralité de sièges (10) peuvent être fixés à ladite deuxième portion d'ancrage (32) et à au moins une parmi lesdites première et troisième portions d'ancrage (30, 34) alignées le long d'une première rangée longitudinale (101), et/ou ledit ou lesdits premiers sièges (10) ou en outre un ou plusieurs deuxièmes sièges (10) de ladite pluralité de sièges peuvent être fixés auxdites première et deuxième portions d'ancrage (30, 32) alignées le long d'une deuxième rangée transversale (103) ou le long d'une première rangée longitudinale (101).

2. La voiture ferroviaire (100) selon la revendication 1, dans laquelle ledit au moins un panneau de revêtement (20) comprend un troisième panneau de revêtement (23) qui est positionné entre lesdits premier et deuxième panneaux (21, 22), et dans laquelle un ou plusieurs desdits premier, deuxième et troisième panneaux (20, 21, 22) sont en aluminium extrudé.

3. La voiture ferroviaire (100) selon l'une quelconque des revendications 1 ou 2, dans laquelle lesdites première et deuxième portions d'ancrage (30, 32) comprennent respectivement un premier rail (30) et un deuxième rail (32), lesdits premier et deuxième rails (30, 32) s'étendant, sensiblement parallèles l'un à l'autre, sur au moins une portion dudit premier panneau de revêtement (21) ou dudit panneau de revêtement unique (20).

4. La voiture ferroviaire (100) selon la revendication 3, dans laquelle lesdits premier et deuxième rails (30, 32) présentent chacun une section transversale en forme de C.

5. La voiture ferroviaire (100) selon l'une quelconque des revendications 1 à 4, dans laquelle ladite troisième portion d'ancrage (34) comprend au moins un évidement d'accrochage (34).

6. La voiture ferroviaire (100) selon la revendication 5 lorsqu'elle est prise en combinaison avec la revendication 3, dans laquelle ledit au moins un évidement d'accrochage (34) est pourvu sur ledit deuxième panneau de revêtement (22) espacé desdits premier et deuxième rails (30, 32) et au-dessus de ceux-ci.

7. La voiture ferroviaire (100) selon l'une quelconque des revendications 5 et 6, dans laquelle ledit au moins un évidement d'accrochage (34) est formé par un troisième rail prévu et s'étendant en continu sur au moins une portion dudit deuxième panneau de revêtement (22).

8. La voiture ferroviaire (100) selon l'une quelconque des revendications 5 et 6, dans laquelle ledit au moins un évidement d'accrochage (34) comprend une pluralité d'évidements d'accrochage individuels (34) espacés les uns des autres à des positions d'ancrage prédéfinies dudit deuxième panneau de revêtement (22).
